# EUROPÄISCHE PATENTSCHRIFT

(11) **EP 2 374 656 B1**
(45) Veröffentlichungstag und Bekanntmachung des Hinweises auf die Patenterteilung: **17.12.2014**
(21) Anmeldenummer: 11157056.0
(22) Anmeldetag: 04.03.2011
(51) Int. Cl.: B60N 2/42, B60N 2/427

(54) **Fahrzeugsitzaufnahme**
Vehicle seat holder
Réception de siège de véhicule

(43) Veröffentlichungstag der Anmeldung: 12.10.2011
(73) Patentinhaber: Metalsa Automotive GmbH, 51702 Bergneustadt (DE)
(72) Erfinder: Hellweg, Hans-Bernd, 53819, Neunkirch-Seelscheid (DE)
(74) Vertreter: Kalkoff & Partner

(56) Entgegenhaltungen:
- WO-A1-2005/054004
- DE-A1- 19 756 252
- GB-A- 2 347 620
- US-A- 2 823 730
- US-A- 3 452 834
- US-A- 3 578 376
- US-A- 6 142 564
- US-A1- 2001 011 830
- US-A1- 2007 273 186

## Beschreibung

Die Erfindung betrifft eine Fahrzeugsitzaufnahme, mit
- einem mit einem Fahrzeugboden verbindbaren Grundkörper und
- einem mit einem Fahrzeugsitz, insbesondere einem Schienenpaar eines Fahrzeugsitzes, bevorzugt einer Bodenschiene eines Fahrzeugsitzes verbindbaren Aufnahmekörper.

Kraftfahrzeugsitze, insbesondere PKW-Fahrzeugsitze werden üblicherweise über standardmäßig an den Fahrzeugsitzen angeordnete Sitzschienenpaare, mit dem Fahrzeugboden verbunden. Hierzu weisen die Fahrzeugböden in der Regel bereits entsprechende Befestigungsöffnungen, bspw. mit einem Gewinde versehene Bohrungen auf, die ein Anschrauben der Unterschiene der Schienenpaare der Fahrzeugsitze mittels geeigneter Verbindungsschrauben am Fahrzeugboden ermöglichen. Die Bodenschiene wird durch diese Verbindung ortsfest an dem Fahrzeug angeordnet. Eine Längsverstellung des Fahrzeugsitzes ist jedoch durch eine Verschiebung einer Sitzschiene gegenüber der Bodenschiene möglich ist, wobei im Betrieb des Fahrzeuges eine eingestellte Sitzposition gegenüber dem Fahrzeugboden festgelegt ist, so dass der Fahrzeugsitz weitestgehend starr über die bestehenden Verschraubungen mit dem Fahrzeugboden verbunden ist.

Im Falle von Verkehrsunfällen beklagen sich die Fahrzeuginsassen häufig über ein sogenanntes Schleudertrauma, wobei dieses selbst dann auftritt, wenn der Unfall mit einer vergleichsweise geringen Geschwindigkeit erfolgte. Als Schleudertrauma werden dabei Krankheitssymptome angesehen, die aus einer Beschleunigung und Überstreckung des Kopfes resultieren, welche üblicherweise bei einem Heckaufprall auftreten.

Die Verletzungen resultieren dabei aus dem auch als Whiplash-Effekt beschriebenen Bewegungsablauf des Kopfes beim Unfall, wobei infolge einer rückwärts gerichteten Bewegung eines Fahrzeuginsassen nach einem Heckaufprall zwar der Oberkörper durch die starre Rückenlehne abgefangen wird, der Kopf jedoch oberhalb des Nackens plötzlich abknickt, so dass es zu dem zuvor beschriebenen Schleudertrauma kommt.

Zur Verminderung des Whiplash- oder Peitschenschlageffekt existiert bereits eine Vielzahl von Lösungsansätzen. Neben der Verbesserung der Kopfstützen werden auch Systeme entwickelt, die durch geeignete Ausgestaltung der Fahrzeugsitze die Verlagerbarkeit der Rückenlehne im Crashfall ermöglichen. Die Verlagerbarkeit der Rückenlehne soll dabei dazu dienen, über die rückwärts gerichtete Bewegung der Rückenlehne den Körper aufzufangen und die crashinduzierte Bewegung sanft abzubremsen, um so die aus einem abrupten Abbremsen der Rückenbewegung resultierende Kopfbeschleunigung zu reduzieren. Die bekannten Systeme setzen jedoch eine umfangreiche und kostenintensive Ausgestaltung der Fahrzeugsitze voraus, um eine im Crashfall bewegliche Anordnung, bspw. der Rückenlehne zu ermöglichen.

Vorrichtungen zur Verlagerung des Fahrzeugsitzes in eine Crashlage sind bspw. aus der US 2007/273186 A1 sowie WO 2005/054004 A1 bekannt. Durch die in diesen Druckschriften offenbarte stoffschlüssige Verbindung von Grundkörper und Aufnahmekörper, die im Crashfall durch gezieltes Einreißen Energie aufnehmen soll, lässt sich eine vorhersagbare Wirkungsweise nicht zuverlässig realisieren. Weitere in den Druckschriften US 6142 564 A, US 3 452 834 A, US 3 578 376 A, US 2 823 730 A, DE 197 56 252 A1, US 2001/011830 A1 und GB 2 347 620 A beschriebene Vorrichtungen zur Verlagerung des Fahrzeugsitzes in einer Crashsituation weisen ebenfalls den Nachteil auf, dass diese keine sichere und zuverlässige Wirkungsweise gewährleisten.

Hiervon ausgehend liegt der Erfindung die Aufgabe zugrunde, eine Fahrzeugsitzaufnahme zur Anordnung eines Fahrzeugsitzes an einem Fahrzeugboden sowie einen Fahrzeugboden bereitzustellen, welche insbesondere im Falle eines Heckaufpralls eine definierte Bewegung des Fahrzeugsitzes zur Reduzierung des Peitschenschlageffekts ermöglicht.

Die Erfindung löst die Aufgabe durch eine Fahrzeugsitzaufnahme mit den Merkmalen des Anspruchs 1 sowie einen Fahrzeugboden mit den Merkmalen des Anspruchs 10. Vorteilhafte Weiterbildungen der Erfindung sind in den abhängigen Ansprüchen angegeben.

Kennzeichnend für die erfindungsgemäße Fahrzeugsitzaufnahme ist, dass der Aufnahmekörper im Crashfall relativ gegenüber dem Grundkörper aus einer Normallage in Richtung auf eine Crashlage verlagerbar ist und im Normalbetrieb lagestabil an dem Grundkörper angeordnet ist, wobei der Aufnahmekörper in Normallage über ein mittels einer pyrotechnisch oder elektromagnetisch wirkenden Betätigungseinheit außer Eingriff bringbares Sperrelement formschlüssig mit dem Grundkörper verbunden ist.

Gemäß der Erfindung weist die Fahrzeugsitzaufnahme einen mit dem Fahrzeugboden verbindbaren Grundkörper sowie einen mit dem Fahrzeugsitz, bevorzugt mit einer Bodenschiene eines Schienenpaares eines Fahrzeugsitzes, verbundenen Aufnahmekörper auf. Im Gegensatz zur bevorzugt starren Verbindung von Aufnahmekörper und Grundkörper mit dem Fahrzeugsitz bzw. Fahrzeugboden ist der Aufnahmekörper dabei selbst nicht starr, sondern verlagerbar gegenüber dem Grundkörper mit diesem verbunden. Die Verlagerbar-keit ist dabei derart ausgeführt, dass der Aufnahmekörper erst im Crashfall gegenüber dem Grundkörper verschoben wird, wobei dann ein Fahrzeugsitz aufgrund der über die Fahrzeugsitzaufnahme erfolgten Verbindung sich entsprechend der Relativbewegung des Aufnahmekörpers gegenüber dem Grundkörper verlagert. Der Grad der Verlagerung des Fahrzeugsitzes sowie die Bewegungsrichtung ist dabei u. a. von der Positionierung der Fahrzeugsitzaufnahme gegenüber dem Fahrzeugsitz sowie der Ausgestaltung der Verbindung von Grundkörper und Aufnahmekörper abhängig. Im Fall einer bevorzugten Verwendung der Fahrzeugsitzaufnahme zur Befestigung der - bezogen auf die Einbaulage - vorderen Sitzenden des Fahrzeugsitzes ermöglichen die erfindungsgemäßen Fahrzeugsitzaufnahmen ein Anheben des vorderen Bereichs der Fahrzeugsitzfläche, wodurch der gesamte Sitz um seinen hinteren Anlenkpunkt mit dem Fahrzeugboden verschwenkt wird. Die hieraus resultierende, crash-energieverzehrende Bewegung der Rückenlehne des Fahrzeugsitzes bewirkt eine Dämpfung der im Falle eines Heckaufpralls auftretenden Bewegungen der Fahrzeuginsassen, wodurch eine plötzliche Überstreckung des Kopfes aufgrund einer abrupten Abbremsung des Insassenrückens im Falle von starren Rückenlehnen vermindert und somit Verletzungen reduziert werden.

Die erfindungsgemäße Fahrzeugsitzaufnahme weist ferner den Vorteil auf, durch die energieverzehrende Bewegung, die im Crashfall auf die Fahrzeugsitzschienen wirkenden Belastungen zu reduzieren. Hierdurch wird einem Brechen der Schienen in wirkungsvoller Weise vorgebeugt, wozu diese bei einer üblicherweise starren Anbindung an einen Fahrzeugboden im Crashfall neigen.

Im Falle der vorteilhafterweise vorgesehenen Anbindung des Fahrzeugsitzes über im Bereich der vorderen Enden der Sitzflächen angeordnete Fahrzeugsitzaufnahmen wird dabei die Verlagerung des Aufnahmekörpers gegenüber dem Grundkörper und die damit einhergehende Verdrehung des Fahrzeugsitzes um dessen Anbindungspunkte mit dem Fahrzeugboden im Bereich der hinteren Enden der Fahrzeugsitzfläche, wozu der Fahrzeugsitz bevorzugt auch mit einer entsprechend gelenkigen Verbindung ausgestattet sein kann, durch die erhöhten im Crashfall durch die Insassen auf den Fahrzeugsitz eingeleiteten Kräfte bewirkt, die durch die Verlagerung abgebaut werden können.

Die Verbindung zwischen dem in der Regel ortsfest an dem Fahrzeugboden angeordneten Grundkörper und dem mit dem Fahrzeugsitz, vorzugsweise der Bodenschiene verbundenen Aufnahmekörper ist dabei dergestalt, dass die im Normalbetrieb des Fahrzeugs durch den Insassen über den Fahrzeugsitz auf die Fahrzeugsitzaufnahme wirkenden Kräfte keine Verlagerung des Aufnahmekörpers gegenüber dem Grundkörper bewirken und diese in ihrer relativen Position zueinander, nämlich in der Normallage, verbleiben. Erst die bei einem Unfall auftretenden, auf die Fahrzeugsitzaufnahme wirkenden Kräfte bewirken eine Verlagerung des Aufnahmekörpers gegenüber dem Grundkörper, wobei durch die Verlagerung ein Energieabbau stattfindet. Der Umfang des Energieabbaus ist dabei über die Ausgestaltung der Verbindung zwischen dem Grundkörper und dem Aufnahmekörper, u. a. über den maximalen Verstellweg des Aufnahmekörpers gegenüber dem Grundkörper einstellbar.

Die erfindungsgemäße Fahrzeugsitzaufnahme stellt somit eine besonders einfache Möglichkeit dar, im Falle eines Heckaufpralls drohende Verletzungen der Fahrzeuginsassen zu reduzieren. Die Fahrzeugsitzaufnahme lässt sich dabei in besonders einfacher Weise mit dem Fahrzeugboden verbinden und zeichnet sich dabei dadurch aus, dass eine Anpassung der Fahrzeugsitze zu deren Verbindung mit den Fahrzeugsitzaufnahmen hierfür nicht erforderlich ist. Die Fahrzeugsitze können in mittlerweile nahezu standardisierter Form über die üblicherweise an den Bodenschienen vorgesehenen Befestigungsöffnungen mit dem Aufnahmekörper verbunden, insbesondere verschraubt werden. Im Normalbetrieb weist der unter Verwendung einer erfindungsgemäßen Fahrzeugsitzaufnahme angeordnete Fahrzeugsitz dabei keinerlei gegenüber in herkömmlicher Weise angeordneten Fahrzeugsitzen abweichende Eigenschaften auf. Im Crashfall wird durch die Fahrzeugsitzaufnahme jedoch eine Fahrzeugsitzbewegung ermöglicht, welche die aus dem Peitschenschlageffekt resultierenden Verletzungen verhindert oder zumindest reduziert.

Die Anbindung des Aufnahmekörpers an dem Grundkörper in der Normallage derart, dass im Normalbetrieb des Kraftfahrzeuges keine Verlagerung des Aufnahmekörpers gegenüber dem Grundkörper stattfindet, erfolgt nach der Erfindung dadurch, dass der Aufnahmekörper in der Normallage über eine formschlüssig wirkende Verbindung an dem Grundkörper festgelegt ist. Die Herstellung der Normallage über eine formschlüssige Verbindung lässt sich in besonders einfacher Weise realisieren und gewährleistet in besonders wirksamer Weise, dass der Aufnahmekörper in der Normallage lagestabil an dem Grundkörper angeordnet ist.

Die Ausgestaltung der Relativbewegung des Aufnahmekörpers gegenüber dem Grundkörper im Crashfall ist grundsätzlich frei wählbar, wobei insbesondere die zum Energieabbau vorgesehene Ausgestaltung in beliebiger Weise ausgeführt sein kann. Nach einer besonders vorteilhaften Ausgestaltung der Erfindung sind der Aufnahmekörper und der Grundkörper im Bewegungsbereich des Aufnahmekörpers in Richtung auf die Crashlage jedoch über Reibflächen miteinander in Kontakt befindlich. Der Bewegungsbereich des Aufnahmekörpers in Richtung auf die Crashlage betrifft dabei den Bereich, den der Aufnahmekörper im Crashfall durchläuft, bis er in die Crashlage gelangt, welche besonders vorteilhafterweise durch einen an dem Grundkörper angeordneten Anschlag für den Aufnahmekörper festgelegt sein kann. Die Ausgestaltung der Verbindung von Aufnahmekörper und Grundkörper über Reibflächen, über die darüber hinaus gemäß einer besonders vorteilhaften Ausgestaltung der Erfindung auch die lagestabile Anordnung des Aufnahmekörpers an dem Grundkörper im Normalbetrieb realisiert werden kann, ermöglicht es, über die Auslegung der über die Reibflächen bestehenden Verbindung, welche über den gesamten Bewegungsbereich aber auch nur über Teilbereiche vorliegen kann, die zur Verlagerung notwendigen Energie und damit den hieraus resultierenden Energieabbau festzulegen. Beispielsweise besteht durch die Möglichkeit der Ausgestaltung der Reibflächen mit einer Riffelung oder definierten Oberflächenrauhigkeit in einfacher Weise die Möglichkeit, die Verbindung an die vorgegebenen Anforderungen anzupassen. Die vielfältigen Gestaltungsmöglichkeiten der Reibflächen, wie bspw. die Größe der Reibflächen sowie deren Ausgestaltung ermöglicht es dabei in einfacher Weise die gewünschten Eigenschaften zu erzielen.

Die nach der Erfindung vorgesehene formschlüssig wirkende Verbindung zwischen Grundkörper und Aufnahmekörper zu einer lagestabilen Anordnung des Aufnahmekörpers an dem Grundkörper im Normalbetrieb erfolgt nach der Erfindung durch ein im Crashfall verlagerbares, in der Normallage mit dem Aufnahmekörper und dem Grundkörper in Eingriff befindliches Sperrelement.

Das Sperrelement ist dabei in der Normallage derart an dem Grundkörper und dem Aufnahmekörper angeordnet, dass durch das Sperrelement eine Relativbewegung des Aufnahmekörpers gegenüber dem Grundkörper blockiert ist. Hierdurch kann in besonders zuverlässiger Weise gewährleistet werden, dass es im Normalbetrieb nicht zu einer Verlagerung des Aufnahmekörpers gegenüber dem Grundkörper kommt. Eine solche Verlagerung, welche nur im Crashfall erfolgen soll, setzt nämlich eine vorherige Verlagerung des Sperrelements in eine Position voraus, in der die durch das Sperrelement erzielte Sperrwirkung aufgehoben wird. Dies kann bspw. durch eine Verschiebung des Sperrelements in eine Position erfolgen, in der dieses nur noch mit dem Aufnahmekörper oder dem Grundkörper in Eingriff befindlich ist, so dass eine Verlagerbarkeit gegeben ist. Eine Verlagerung des Sperrelements kann dabei an ein Signal eines geeigneten Crashsensors gekoppelt sein, welcher zuverlässig eine Unfallsituation erkennt, in welcher eine Verlagerbarkeit des Fahrzeugsitzes unter Verwendung der Fahrzeugsitzaufnahme erforderlich ist. Die Erfindung zeichnet sich insbesondere dadurch aus, dass durch die Verwendung eines Sperrelements in jedem Fall ausgeschlossen werden kann, dass es zu einer ungewollten Verlagerung des Aufnahmekörpers gegenüber dem Grundkörper kommt. Die übrige Verbindung des Aufnahmekörpers mit dem Grundkörper kann unabhängig von deren Eignung zur Sicherung der Normallage im Normalbetrieb erfolgen. Hierdurch lässt sich die Fahrzeugsitzaufnahme mit geringeren Restriktionen ausgestalten und gewährleistet überdies eine zuverlässige Verlagerung des Aufnahmekörpers im Crashfall.

Nach der Erfindung ist das Sperrelement im Crashfall durch eine elektromagnetisch und/oder pyrotechnisch wirkende Betätigungseinheit mit dem Grundkörper und/oder dem Aufnahmekörper außer Eingriff bringbar.

Gemäß der Erfindung wirkt im Crashfall die Betätigungseinheit derart auf das Sperrelement ein, dass dieses in eine Position verlagert wird, in der der Aufnahmekörper gegenüber dem Grundkörper verschiebbar ist. Die Betätigungseinheit, die hierzu bspw. mit geeigneten, in der Regel bereits vorhandenen Crashsensoren gekoppelt werden kann, kann dabei mit einer elektromagnetisch oder pyrotechnisch wirkenden Antriebseinheit ausgestattet sein, welche nach einer Aktivierung der Betätigungseinheit die Verlagerung des Sperrelements bewirkt. Eine Verlagerung des Sperrelements in eine Position, in der dieses vorzugsweise zumindest entweder nur noch mit dem Aufnahmekörper oder nur noch mit dem Grundkörper in Eingriff befindlich ist, ist dabei ausreichend, um die durch das Sperrelement in der Normallage bereitgestellte Sperrwirkung aufzuheben.

Die Verwendung einer elektromagnetisch oder pyrotechnisch wirkenden Betätigungseinheit zeichnet sich dabei durch ihre hohe Zuverlässigkeit aus und erlaubt es zudem, diese mit bekannten und in der Regel bereits vorhandenen Crashsensoren zu kombinieren, so dass sich die Fahrzeugsitzaufnahme in besonders einfacher und kostengünstiger Weise mit einer hohen Funktionssicherheit am Fahrzeug anordnen lässt.

Über die zur Verlagerung des Aufnahmekörpers gegenüber dem Grundkörper erforderliche Betätigungsenergie kann die durch die Verlagerung des Sitzes abbaubare Kraft bestimmt werden. Wie bereits an obiger Stelle ausgeführt, kann bspw. über die Ausgestaltung aufeinander reibender Flächen von Aufnahmekörper und Grundkörper dabei Einfluss auf die erforderliche Betätigungsenergie genommen werden. Nach einer besonders vorteilhaften Ausgestaltung der Erfindung ist im Bewegungsbereich des Aufnahmekörpers aus der Normallage in Richtung auf die Crashlage ein elastisch und/oder plastisch verformbares Absorptionselement angeordnet. Ein solches Absorptionselement, das nur in einem Teilbereich des Bewegungsbereichs des Aufnahmekörpers ausgehend aus der Normallage in die Crashlage angeordnet sein kann oder aber auch über den gesamten Bewegungsbereich mit dem Aufnahmekörper in Eingriff befindlich ist, erlaubt es, über die Ausgestaltung und Auswahl des Absorptionselement in besonders einfacher und komfortabler Weise den zur Verlagerung des Aufnahmekörpers erforderlichen Energieaufwand festzulegen.

Bei der Verwendung eines Absorptionselements kann auf eine unter Umständen aufwendige Ausgestaltung der Kontaktflächen von Aufnahmekörper und Grundkörper als Reibflächen verzichtet werden. Es ist jedoch auch möglich, ein Absorptionselement ergänzend zu einer entsprechenden, reibenden Verbindung vorzusehen, so dass in ergänzender Weise das Absorptionsverhalten festgelegt werden kann. Die Verwendung eines Absorptionselements zeichnet sich somit dadurch aus, dass hierdurch eine hohe Variabilität und gute Anpassbarkeit an die geforderten Verlagerungseigenschaften erreicht werden kann.

Die Anordnung des Absorptionselements derart, dass es im Falle der Verlagerung des Aufnahmekörpers gegenüber dem Grundkörper mit dem Aufnahmekörper in Eingriff gelangt, ist grundsätzlich frei wählbar. Nach einer besonders vorteilhaften Ausgestaltung der Erfindung ist der Aufnahmekörper und/oder der Grundkörper jedoch form- und/oder stoffschlüssig mit dem Absorptionselement verbunden. Eine entsprechende, kostengünstig herstellbare Verbindung gewährleistet in besonders zuverlässigem Maße, dass das Absorptionselement im Falle der Verlagerung mit dem Aufnahmekörper zusammenwirkt. So kann das Absorptionselement bspw. mit dem Grundkörper und dem Aufnahmekörper verklebt, bspw. an diese anvulkanisiert sein, wodurch sich eine besonders zuverlässige Verbindung ergibt und gewährleistet wird, dass mit Beginn der Relativbewegung des Aufnahmekörpers gegenüber dem Grundkörper durch das Absorptionselement ein Energieabbau stattfindet.

Die Ausgestaltung des Absorptionselements ist dabei ebenfalls grundsätzlich frei wählbar, wobei dieses sowohl rein plastisch als auch elastisch aber auch kombiniert verformbar ausgebildet sein kann. Nach einer besonders vorteilhaften Ausgestaltung der Erfindung ist das Absorptionselement jedoch durch einen deformierbaren, insbesondere elastisch deformierbaren Kunststoffkörper, insbesondere ein Dämpfungsgummi gebildet. Ein derartiges Absorptionselement lässt sich in beliebiger Form besonders einfach und kostengünstig herstellen, ermöglicht einen hohen Energieabbau und erlaubt eine gute Anpassbarkeit an den Grundkörper und/oder den Aufnahmekörper. Alternativ kann das Absorptionselement auch rein plastisch verformbar ausgestaltet sein, so dass sich nach der Deformation keine Rückstellkraft durch das Absorptionselement bzw. die Fahrzeugsitzaufnahme einstellt.

Nach einer weiteren Ausgestaltung der Erfindung ist die Verbindung des Aufnahmekörpers mit dem Grundkörper derart ausgebildet, dass der Aufnahmekörper gegen eine Rückverlagerung in Richtung auf die Normallage gesichert ist. Demnach ist die Fahrzeugsitzaufnahme derart ausgestaltet, dass im Crashfall eine ungehinderte Verlagerung des Aufnahmekörpers in Richtung auf die Crashlage erfolgen kann, eine Rückverlagerung in Richtung der Normallage ist jedoch ausgeschlossen. Hierdurch kann besonders wirksam verhindert werden, dass ein unter Verwendung der Fahrzeugsitzaufnahme angeordneter Fahrzeugsitz durch die Fahrzeugsitzaufnahme über den Aufnahmekörper beschleunigt wird. Die Ausgestaltung der Fahrzeugsitzaufnahme derart, dass eine Rückverlagerung des Aufnahmekörpers in Richtung auf die Normallage blockiert ist, ist dabei grundsätzlich frei wählbar. So kann dies bspw. über geeignet ausgebildete Reibflächen erfolgen, welche möglicherweise über eine entsprechende Profilierung bspw. Verzahnung eine Bewegung des Aufnahmekörpers in Richtung auf die Normallage blockiert.

Die grundsätzliche Ausgestaltung der Fahrzeugsitzaufnahme, d. h. insbesondere die Ausgestaltung des Grundkörpers und des Aufnahmekörpers ist den Einbaubedingungen entsprechend grundsätzlich frei wählbar. Nach einer besonders vorteilhaften Ausgestaltung der Erfindung ist der Grundkörper jedoch durch eine an einem Fahrzeugboden anordbare Hülse und der Aufnahmekörper durch ein in der Hülse verschiebbar angeordnetem Kolbenelement gebildet, wobei die Hülse und das in der Regel an die Hülse angepasste Kolbenelement grundsätzlich eine beliebige Querschnittsform aufweisen kann. So sind neben kreisförmigen oder elliptischen Querschnitten auch polygonale Querschnitte denkbar. Eine entsprechende Ausgestaltung der Fahrzeugsitzaufnahme lässt sich besonders einfach und kostengünstig sowie besonders klein herstellen, so dass nur ein geringer Bauraum im Bereich des Fahrzeugbodens beansprucht wird. Im Crashfall erfolgt eine Verlagerung des als Kolbenelement ausgebildeten Grundkörpers innerhalb der Hülse, wobei über eine Ausgestaltung der Kontaktflächen eine Einstellung der sich dabei ergebenden Energieabsorption in einfacher Weise realisiert werden kann. Die Ausgestaltung der Fahrzeugsitzaufnahme mit einer Hülse und einem Kolbenelement stellt dabei nur eine mögliche Ausgestaltung der Fahrzeugsitzaufnahme dar. Darüber hinaus existiert noch eine Vielzahl weiterer Ausgestaltungsmöglichkeiten, so dass sich die Fahrzeugsitzaufnahme besonders vielfältig ausgestalten und damit an die Einbaubedingungen anpassen lässt.

Kennzeichnend für den erfindungsgemäßen Fahrzeugboden ist, dass die Mittel mit denen der Fahrzeugsitz am Fahrzeugboden befestigt ist, durch eine Fahrzeugsitzaufnahme gemäß einem der Ansprüche 1 - 9 gebildet ist. Ein entsprechender Fahrzeugboden zeichnet sich dabei dadurch aus, dass er eine einfache und problemlose Anbindung herkömmlicher Fahrzeugsitze ermöglicht, nachdem die Fahrzeugsitzaufnahme anstelle anderer Aufnahmen am Fahrzeugboden angeordnet ist. Eine Anpassung des Fahrzeugbodens oder Fahrzeugsitzes aufgrund der Verwendung der Fahrzeugsitzaufnahmen kann somit unterbleiben.

Die Anordnung der Fahrzeugsitzaufnahme kann dabei in Abhängigkeit der anzuordnenden Fahrzeugsitze in geeigneter Form am Fahrzeugboden erfolgen. Besonders vorteilhafterweise ist die Fahrzeugsitzaufnahme jedoch im Bereich von Längs- und/oder Querträgern des Fahrzeugbodens angeordnet. Durch diese Ausgestaltung lässt sich die Fahrzeugsitzaufnahme besonders zuverlässig mit dem Fahrzeugboden verbinden, da der Fahrzeugboden im Bereich der Längs- und/oder Querträger eine besonders hohe Festigkeit aufweist. Zudem steht im Bereich der Längs- und/oder Querträger ein in Fahrzeughochachse betrachtet höherer Bauraum zur Verfügung, der es ermöglicht, die Fahrzeugsitzaufnahme, wie nach einer vorteilhaften Weiterbildung der Erfindung vorgesehen, in den Fahrzeugboden integriert anzuordnen.

Hierdurch lässt sich eine Ausgestaltung des Fahrzeugbodens realisieren, bei dem der Aufnahmekörper im Wesentlichen in einer Ebene mit einer dem Fahrzeugsitz zugewandten Oberfläche des Fahrzeugbodens angeordnet ist, so dass sich der Fahrzeugsitz besonders flach am Fahrzeugboden montieren lässt. Nachdem bei einer entsprechenden Ausgestaltung der Erfindung für den Monteur darüber hinaus in der Regel nicht unmittelbar erkennbar ist, dass der Fahrzeugsitz nicht an einer starren Aufnahme am Fahrzeugboden, sondern an einem Aufnahmekörper einer Fahrzeugsitzaufnahme angeordnet ist, erübrigen sich auch unter Umständen erforderliche Einbauhinweise, da der Einbau in herkömmlicher Weise erfolgen kann.

Ausgestaltungen der Erfindung werden nachstehend mit Bezug auf die Zeichnungen näher erläutert. In den Zeichnungen zeigen:
- Fig. 1: eine perspektivische Ansicht einer ersten Ausführungsform einer Fahrzeugsitzaufnahme in einer Ruhelage;
- Fig. 2: eine Seitenansicht einer Fahrzeugsitzaufnahme von Fig. 1;
- Fig. 3: eine Draufsicht auf die Fahrzeugsitzaufnahme von Fig. 1;
- Fig. 4: eine erste Ansicht eines Schnitts der Fahrzeugsitzaufnahme von Fig. 1 entlang der Schnittlinie A-A von Fig. 3;
- Fig. 5a: eine zweite Ansicht eines Schnitts der Fahrzeugsitzaufnahme von Fig. 1 entlang der Schnittlinie B-B von Fig. 3;
- Fig. 5b: eine Ansicht eines Schnitts der Fahrzeugsitzaufnahme von Fig. 1 entlang der Schnittlinie C-C von Fig. 3 in einer Crashlage;
- Fig. 6: eine erste Ansicht eines Schnitts einer zweiten Ausführungsform einer Fahrzeugsitzaufnahme in der Ruhelage entlang der Schnittlinie A-A von Fig. 3;
- Fig. 7a: eine zweite Ansicht eines Schnitts der zweiten Ausführungsform der Fahrzeugsitzaufnahme von Fig. 6 entlang der Schnittlinie B-B von Fig. 3;
- Fig. 7b: eine Ansicht eines Schnitts der Fahrzeugsitzaufnahme von Fig. 6 entlang der Schnittlinie C-C von Fig. 3 in der Crashlage;
- Fig. 8: eine perspektivische Ansicht einer dritten Ausführungsform einer Fahrzeugsitzaufnahme in einer Ruhelage;
- Fig. 9: eine Seitenansicht der Fahrzeugsitzaufnahme von Fig. 8;
- Fig. 10: eine Draufsicht auf die Fahrzeugsitzaufnahme von Fig. 8;
- Fig. 11: eine erste Ansicht eines Schnitts der Fahrzeugsitzaufnahme von Fig. 8 entlang der Schnittlinie A-A von Fig. 10;
- Fig. 12a: eine zweite Ansicht eines Schnitts der Fahrzeugsitzaufnahme von Fig. 8 entlang der Schnittlinie B-B von Fig. 10;
- Fig. 12b: eine Ansicht eines Schnitts der Fahrzeugsitzaufnahme von Fig. 8 entlang der Schnittlinie C-C von Fig. 10 in der Crashlage;
- Fig. 13: eine Ansicht einer vierten Ausführungsform einer Fahrzeugsitzaufnahme in der Ruhelage entlang der Schnittlinie A-A von Fig. 10;
- Fig. 14: eine Ansicht eines Schnitts der Fahrzeugsitzaufnahme von Fig. 13 entlang der Schnittlinie C-C von Fig. 10 in der Crashlage;
- Fig. 15: in einer skizzierten Darstellung eine Seitenansicht eines unter Verwendung einer Fahrzeugsitzaufnahme angeordneten Fahrzeugsitzes;
- Fig. 16: eine vergrößerte Darstellung der Fahrzeugsitzanbindung von Fig. 15 in einer Vorderansicht und
- Fig.17: eine vergrößerte Darstellung der Fahrzeugsitzanbindung von Fig. 15 in einer vergrößerten Seitenansicht.

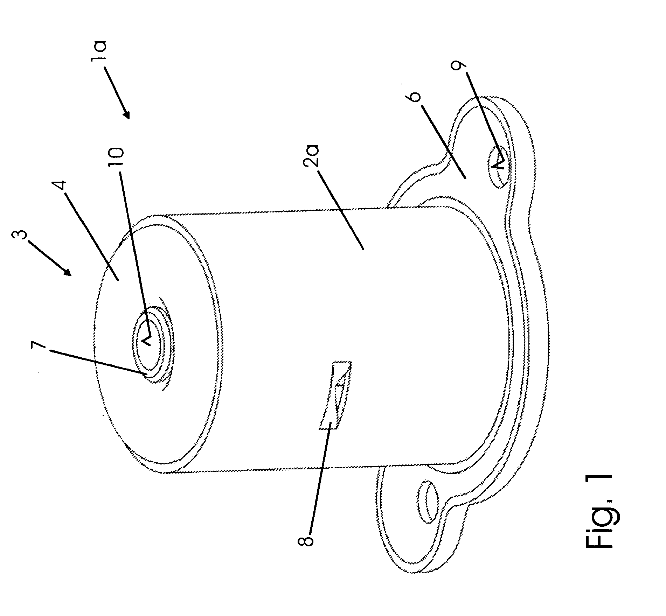

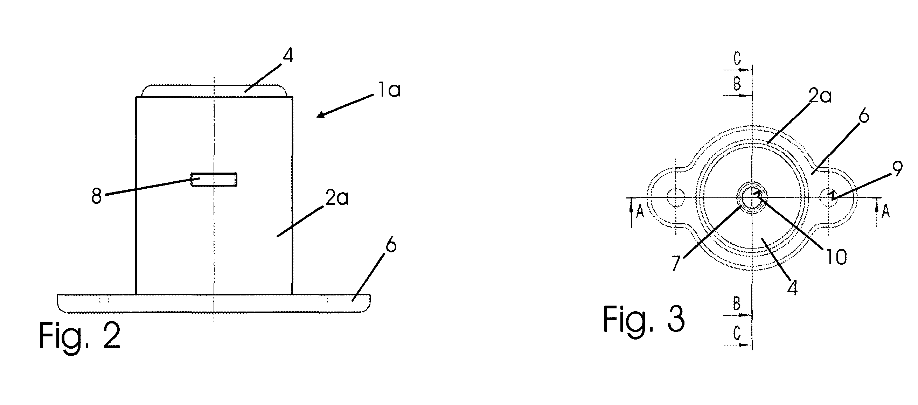

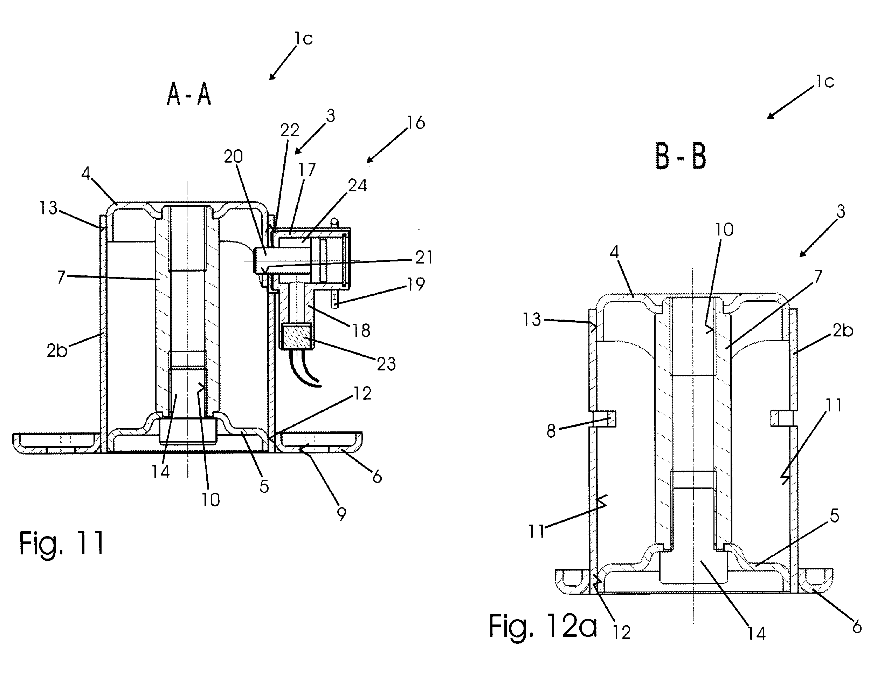

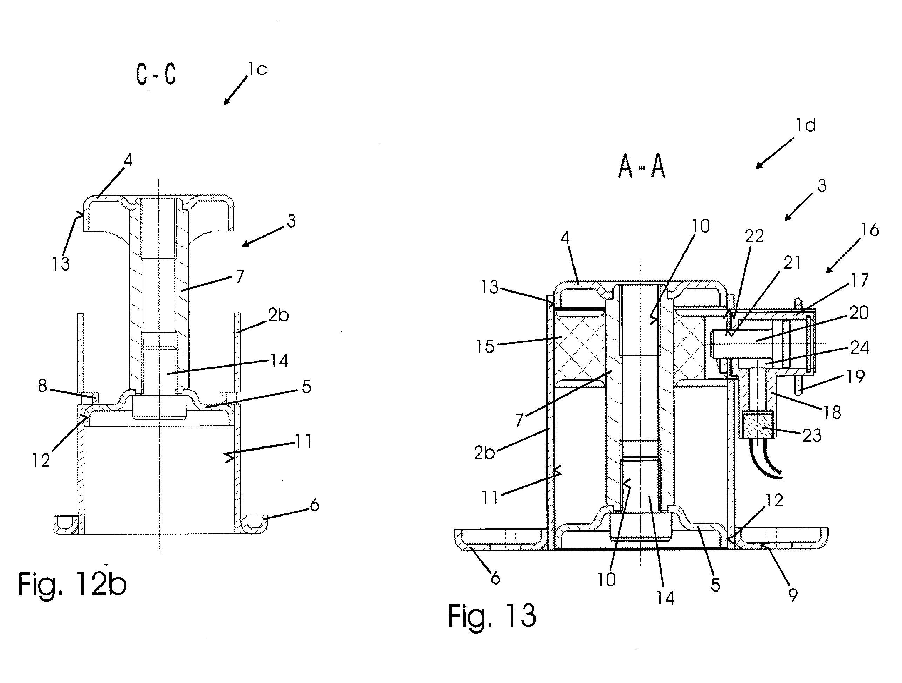

In den nachfolgend dargestellten Figuren 1 - 14 sind insgesamt vier verschiedene Ausführungsformen einer Fahrzeugsitzaufnahme 1a - 1d dargestellt, von denen die Fahrzeugsitzaufnahmen 1a und 1b als passive Fahrzeugsitzaufnahmen 1a, 1b ausgeführt sind, d. h. nur eine kraftschlüssige Verbindung von Grundkörper 2a und Aufnahmekörper 3 in der Normallage aufweisen, wohingegen die Fahrzeugsitzaufnahmen 1c und 1d als aktive Fahrzeugsitzaufnahmen 1c, 1d ausgeführt sind, bei den in der Normallage ein Sperrstift 20 den Aufnahmekörper 3 an dem Grundkörper 2b festlegt.

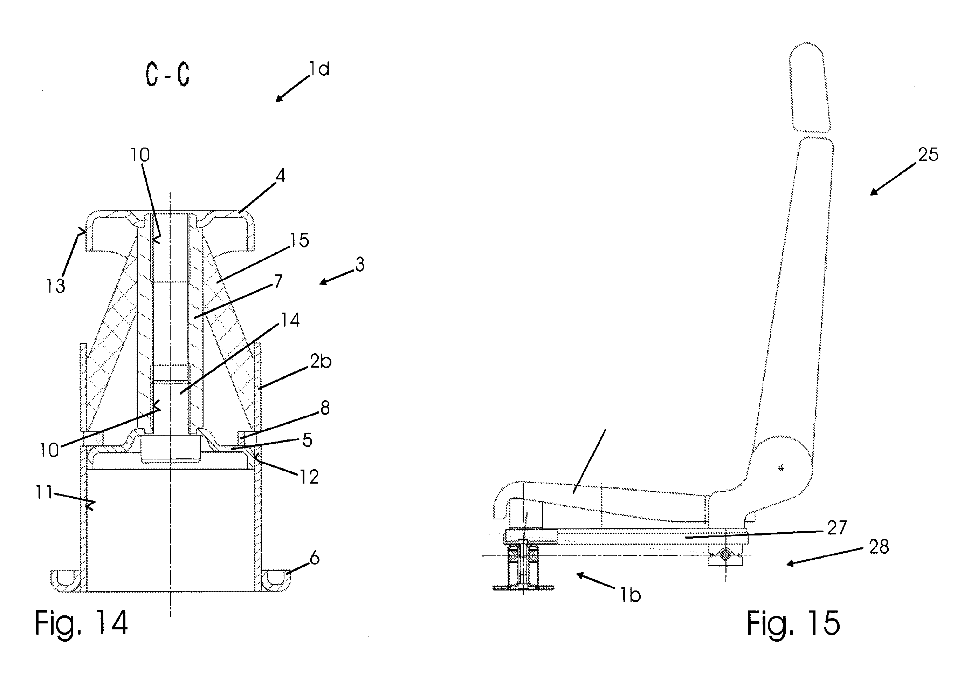

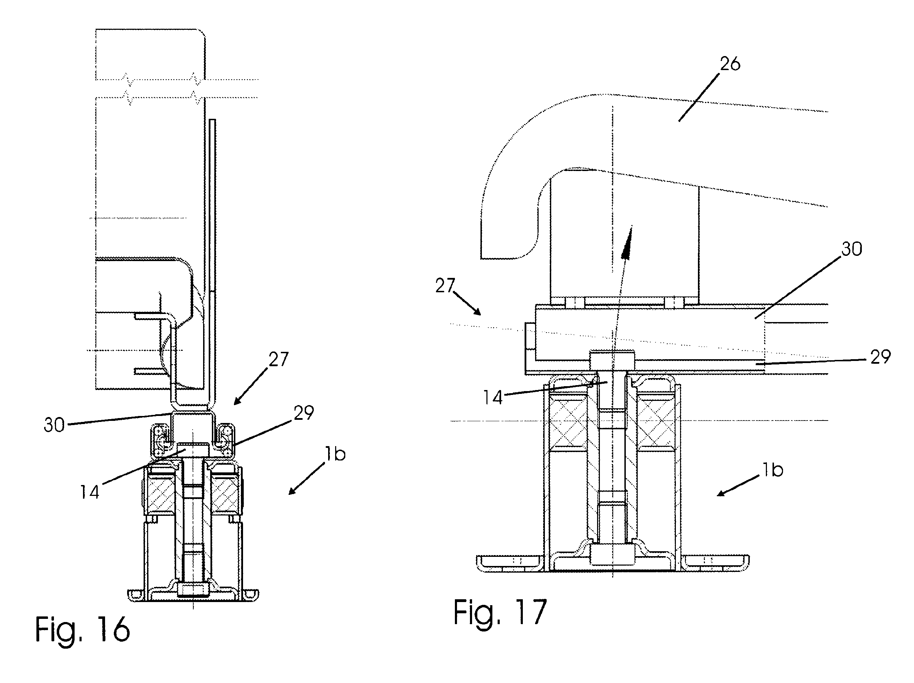

Die in den Fig. 1 - 5b dargestellte Fahrzeugsitzaufnahme 1a weist einen als Hülse 2a ausgebildeten Grundkörper auf, welcher über einen an der Hülse 2a angeschlossenen Flansch 6 mit einem Fahrzeugboden starr verbindbar ist, wobei der Flansch 6 hierzu zwei Bohrungen 9 aufweist, mittels derer die Fahrzeugsitzaufnahme 1a an einem Fahrzeugboden anschraubbar ist. Innerhalb der Hülse 2a ist ein mit einem Fahrzeugsitz 25, insbesondere einer Bodenschiene 29 verbindbarer, als Kolbenelement 3 ausgebildeter Aufnahmekörper angeordnet. Das Kolbenelement 3 weist dabei ein Deckelelement 4 sowie ein Bodenelement 5 auf, die mit ihren umlaufenden Randflächen 12,13 in der in den Figuren 1 - 5a dargestellten Normallage an einer Innenfläche 11 der Hülse 2a anliegen, wobei das Deckelelement 4 und das Bodenelement 5 die Hülse 2a im Bereich ihrer gegenüberliegenden Öffnungen in der Normallage verschließen (vgl. Fig. 15 - 17).

Zur Bildung des Kolbenelements 3 sind das Deckelelement 4 und das Bodenelement 5 darüber hinaus über eine sich in Längsachsenrichtung durch die Hülse 2a, 2b erstreckende Gewindebuchse 7 miteinander verbunden, die hierzu in entsprechende zentrale Öffnungen von Deckelelement 4 und Bodenelement 5 eingepresst ist. Zur Sicherung der Lage des Bodenelements 5 an der Gewindebuchse 7 dient eine Befestigungsschraube 14, welche bodenelementseitig in ein Innengewinde 10 der Gewindebuchse 7 einschraubbar ist. Die Verbindung der Fahrzeugsitzaufnahme 1a mit einem Fahrzeugsitz 25 erfolgt ebenfalls über eine Befestigungsschraube 14, die sich durch eine Öffnung in der Bodenschiene 29 eines Schienenpaars 27 erstrecket und welche in ein im Bereich des Deckelelements 4 angeordnetes weiteres Innengewinde 10 der Gewindebuchse 7 einschraubbar ist.

In der Normallage liegen die Kontaktflächen 12, 13 des Boden- und Deckelelements 4, 5 an der Innenfläche 11 der Hülse 2a an. Die Passung zwischen den Kontaktflächen 12, 13 und der Innenfläche 11 ist dabei derart ausgebildet, dass in der Einbaulage der Fahrzeugsitzaufnahme 1a alle im Normalbetrieb über den Fahrzeugsitz 25 auf die Fahrzeugsitzaufnahme 1a wirkenden Kräfte nicht zu einer Lageverschiebung des Kolbenelements 3 innerhalb der Hülse 2a führen.

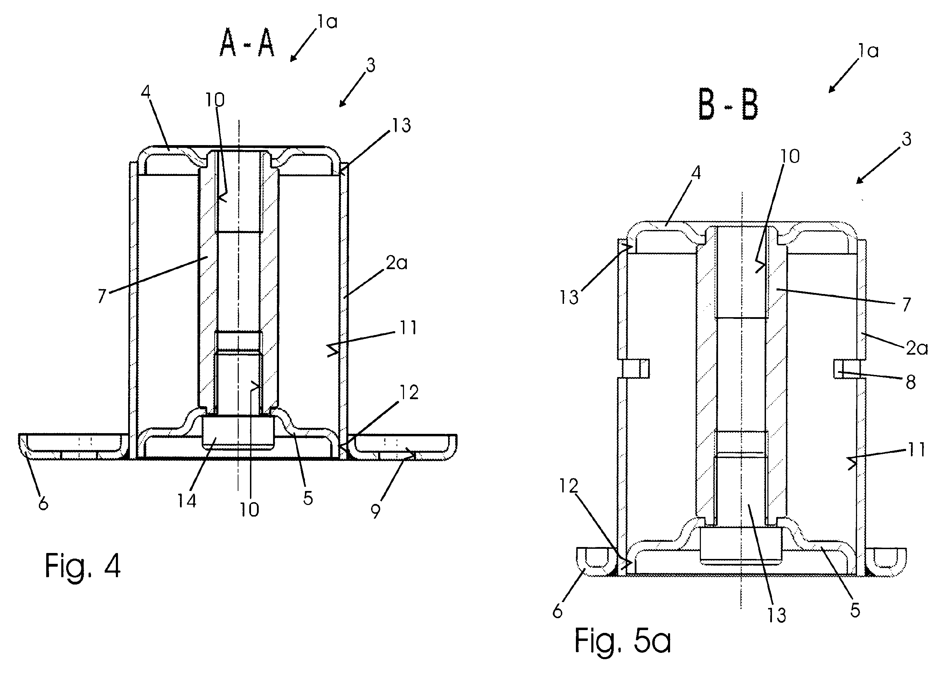

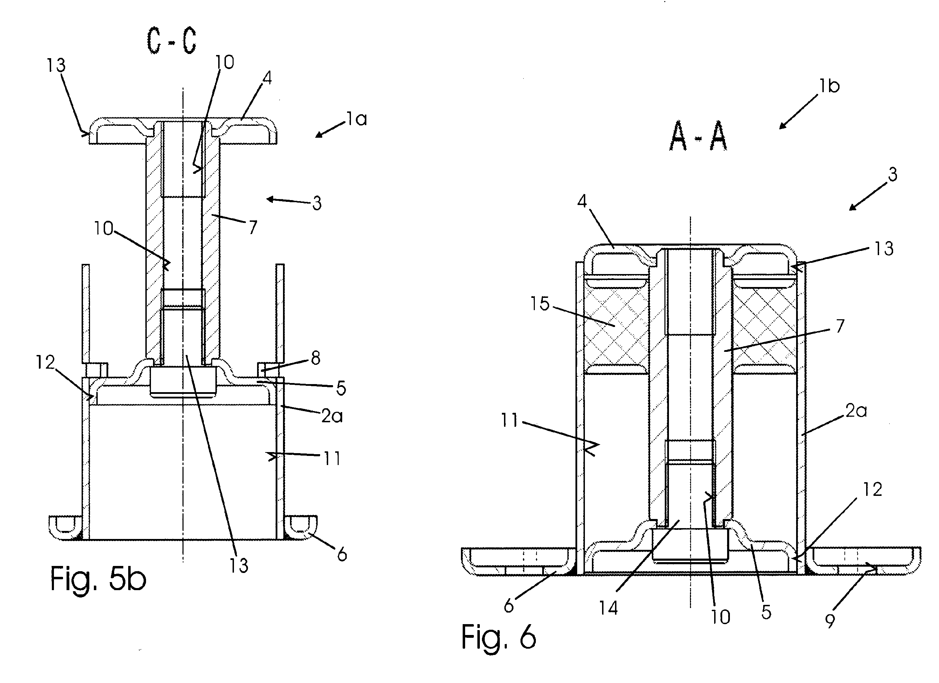

Erst die im Crashfall aufgrund der sich einstellenden Beschleunigung der Insassen über den Fahrzeugsitz 25 auf die Fahrzeugsitzaufnahme 1a wirkenden Kräfte bewirken eine Verlagerung des Kolbenelements 3 in Richtung auf die in Fig. 5b dargestellte Crashlage. Hierdurch wird die Sitzfläche 26 im vorderen - bezogen auf die Einbaulage im Fahrzeug - Bereich angehoben, wodurch der Fahrzeugsitz 25, einhergehend mit einer Verlagerung der Rückenlehne, um seinen hinteren Sitzanlenkpunkt 28 verschwenkt wird. Die Crashlage der Fahrzeugsitzaufnahme 1a, die auch die maximale Verschwenkbarkeit des Fahrzeugsitzes 25 festlegt, ist dabei durch einen Anschlag begrenzt, wobei hierzu das Bodenelement 5 mit Einprägungen 8 versehen ist, die in das Innere der Hülse 2a ragen und mit denen das Kolbenelement 3 in der Crashlage in Eingriff gelangt.

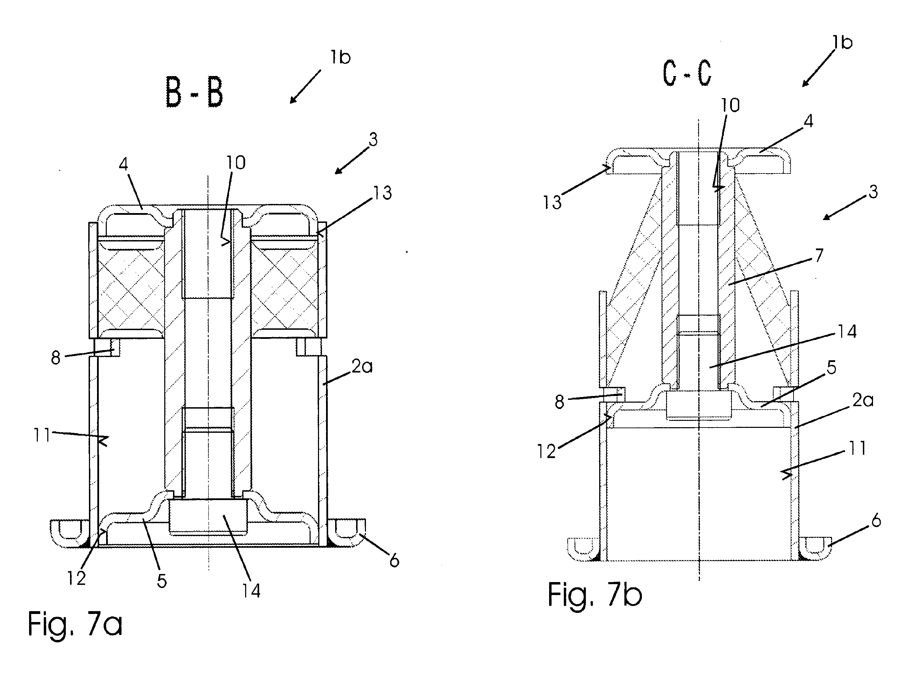

Eine alternative Ausgestaltung einer passiven Fahrzeugsitzaufnahme mit einer in der Normallage allein aufgrund der zwischen Hülse 2a und Kolbenelement 3 vorliegenden Passung bestehenden Lagesicherung ist in den Fig. 6 und 7a in der Normallage sowie in Fig. 7b in der Crashlage dargestellt. Die in diesen Figuren dargestellte Fahrzeugsitzaufnahme 1b unterscheidet sich von der in den Fig. 4 - 5b dargestellten Fahrzeugsitzaufnahme 1a dadurch, dass im Bereich zwischen der Hülse 2a und dem Kolbenelement 3 ein Dämpfungselement 15 angeordnet ist. Das Dämpfungselement 15 erstreckt sich dabei koaxial zur Gewindebuchse 7 und ist mit seinen an der Gewindebuchse 7 angeordneten Kontaktflächen auf die Gewindebuchse 7 aufvulkanisiert, wohingegen die an der Innenfläche 11 anliegende Oberfläche des Dämpfungselements 15 an die Hülse 2a anvulkanisiert ist. Im Falle eins Crashs erfolgt eine Verlagerung des Kolbenelements 3 entgegen der Elastizität des Dämpfungselements 15 bis in die in Fig. 7b dargestellte Crashlage, wobei durch die Deformation des Dämpfungselements 15 ein Energieabbau stattfindet. Im Übrigen stimmt die Fahrzeugsitzaufnahme 1b mit dem Aufbau der Fahrzeugsitzaufnahme 1a überein.

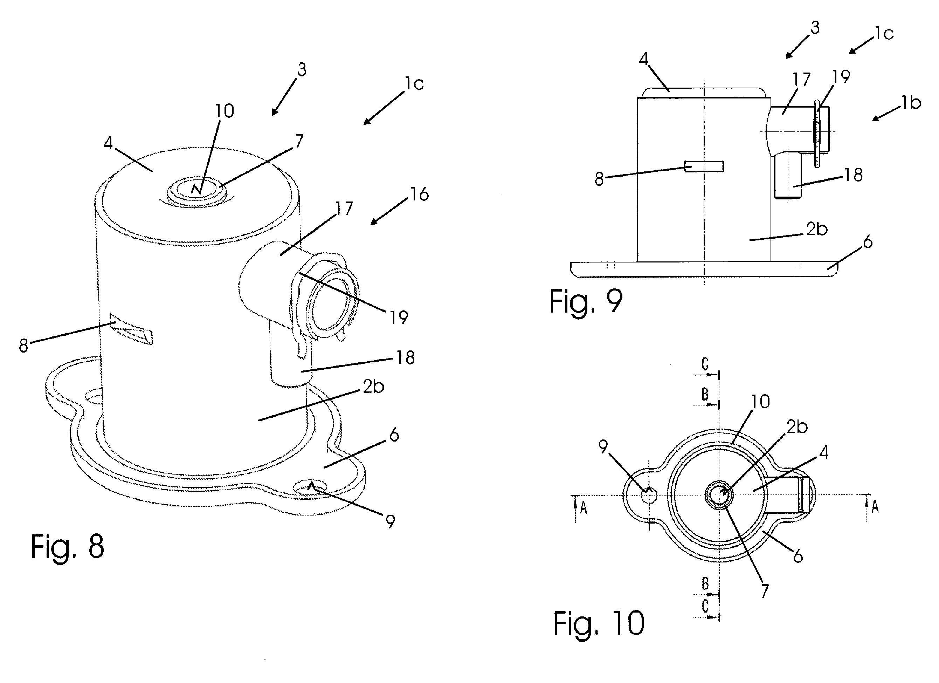

Zwei weitere Ausführungsformen einer Fahrzeugsitzaufnahme 1c, 1d sind in den Fig. 9-14 dargestellt. Diese unterscheiden sich von den zuvor dargestellten Fahrzeugsitzaufnahmen 1a, 1b dadurch, dass diese in der Normallage neben einer kraftschlüssigen Verbindung zudem eine durch einen pyrotechnischen Aktuator 16 bewirkte formschlüssige Verbindung von Kolbenelement 3 und Hülse 2a aufweist. Im Unterschied zu den zuvor dargestellten Fahrzeugsitzaufnahmen 1a, 1b weist die Hülse 2b einen außenseitig angeordneten pyrotechnischen Aktuator 16 auf. Der pyrotechnische Aktuator 16 ist dabei mit einem Aktuatorgehäuse 17 in einer Öffnung 22 der Hülse 2b angeordnet, so dass in der Normallage ein innerhalb des Aktuatorgehäuses 17 verschiebbar gelagerter Sperrstift 20 mit seinem dem Kolbenelement 3 zugewandten Ende in eine Öffnung 21 des Deckelelements 4 hineinragt. Der Sperrstift 20 verhindert somit in der Normallage eine Verlagerung des Kolbenelements 3 gegenüber der Hülse 2b und sichert somit die Position des Kolbenelements 3 in besonders zuverlässiger Weise.

Im Falle eines Crashs erfolgt über eine geeignete Detektierung eine Aktivierung eines Gasgenerators 23, welcher in einer Gasgeneratoraufnahme 18 des pyrotechnischen Aktuators 16 angeordnet ist, wobei die sich dabei ergebende Druckerhöhung innerhalb des Druckraums 24 eine Verlagerung des Sperrstifts 20 in eine dem Kolbenelement 3 entgegengesetzte Richtung bewirkt, wobei der Sperrstift 20 mit dem Deckelelement 4 außer Eingriff gelangt. Die Außer-Eingriff-Stellung des Sperrstifts 20 wird dabei durch einen in das Aktuatorgehäuse 17 hineinragenden Federing 19 gesichert, so dass eine erneute Arretierung des Kolbenelements 3 an der Hülse 2b durch den Sperrstift 20 ausgeschlossen ist.

In Folge der sich damit ergebenden Freigabe kann dann eine Verlagerung des Aufnahmekörpers 3 aufgrund der über dem Fahrzeugsitz 25 im Crashfall eingeleiteten Belastungen erfolgen, wobei aus der Anhebung der Sitzfläche 26 im vorderen Bereich eine Drehbewegung des Fahrzeugsitzes 25 um den hinteren Sitzanbringungspunkt 28 resultiert, wobei der Sitz 25 in Abhängigkeit vom Verstellweg des Kolbenelements 3 um bis zu 15° nach hinten - bezogen auf die Einbaulage am Fahrzeug - verschwenkt werden kann.

In den Fig. 1-17 ist eine mögliche Anordnung eines Fahrzeugsitzes 25 an einem Fahrzeugboden unter Verwendung von im vorderen Bereich des Fahrzeugsitzes 25 angeordneten Fahrzeugsitzaufnahmen 1b dargestellt. Eine Befestigungsschraube 14 erstreckt sich dabei durch die Bodenschiene 29 eines Schienenpaares 27 in die Gewindebuchse 7 der Fahrzeugsitzaufnahme 1b. Um eine gute Verlagerbarkeit im Crashfall zu gewährleisten, ist die hinter Fahrzeugsitzanbringung 28 gelenkig ausgebildet. Dies ist jedoch für die Funktion nicht zwingend erforderlich.

## Patentansprüche

1. Fahrzeugsitzaufnahme, mit
- einem mit einem Fahrzeugboden verbindbaren Grundkörper und
- einem mit einem Fahrzeugsitz, insbesondere einem Schienenpaar eines Fahrzeugsitzes, bevorzugt einer Bodenschiene eines Fahrzeugsitzes verbindbaren Aufnahmekörper,
**dadurch gekennzeichnet, dass**
der Aufnahmekörper (3) im Crashfall relativ gegenüber dem Grundkörper (2) aus einer Normallage in Richtung auf eine Crashlage verlagerbar ist und der Aufnahmekörper (3) im Normalbetrieb lagestabil an dem Grundkörper (2) angeordnet ist, wobei der Aufnahmekörper (3) in Normallage über ein mittels einer pyrotechnisch oder elektromagnetisch wirkenden Betätigungseinheit (16) außer Eingriffbringbares Sperrelement (20) formschlüssig mit dem Grundkörper(2) verbunden ist

2. Fahrzeugsitzaufnahme nach Anspruch 1, **dadurch gekennzeichnet, dass** der Aufnahmekörper (3) in der Normallage über eine kraft- und/oder formschlüssig wirkende Verbindung an dem Grundkörper(2) festgelegt ist.

3. Fahrzeugsitzaufnahme nach Anspruch 1 oder 2, **dadurch gekennzeichnet, dass** die kraftschlüssige Verbindung zur im Normalbetrieb lagestabilen und im Crashfall verlagerbaren Anordnung des Aufnahmekörpers (3) an dem Grundkörper (2) ausgebildet ist.

4. Fahrzeugsitzaufnahme nach einem der vorhergehenden Ansprüche, **dadurch gekennzeichnet, dass** der Aufnahmekörper (3) und der Grundkörper (2) im Bewegungsbereich des Aufnahmekörpers (3) in Richtung auf die Crashlage über Reibflächen (11, 12, 13) miteinander in Kontakt befindlich sind.

5. Fahrzeugsitzaufnahme nach einem der vorhergehenden Ansprüche, **dadurch gekennzeichnet, dass** im Bewegungsbereich des Aufnahrnekörpers (3) aus der Normallage in Richtung auf die Crashlage ein elastisch und/oder plastisch verformbares Absorptionselement (15) angeordnet ist.

6. Fahrzeugsitzaufnahme nach Anspruch 5 **dadurch gekennzeichnet, dass** der Aufnahmekörpers (3) und/oder der Grundkörper (2) form- und/oder stoffschlüssig mit dem Absorptionselement (15) verbunden ist.

7. Fahrzeugsitzaufnahme nach Anspruch 5 oder 6 **dadurch gekennzeichnet, dass** das Absorptionselement (15) durch einen deformierbaren, insbesondere elastisch deformierbaren Kunststoffformkörper, insbesondere ein Dämpfungsgummi (15) gebildet ist.

8. Fahrzeugsitzaufnahme nach einem der vorhergehenden Ansprüche, **dadurch gekennzeichnet, dass** der Grundkörper (2) durch eine an einem Fahrzeugboden anordbare Hülse (2a, 2b) und der Aufnahmekörper durch ein in der Hülse (2a, 2b) verschiebbar angeordnetes Kolbenelement (3) gebildet ist.

9. Fahrzeugsitzaufnahme nach einem der vorhergehenden Ansprüche, **dadurch gekennzeichnet, dass** die Verbindung des Aufnahmekörpers (3) mit dem Grundkörper (2) derart ausgebildet ist, dass der Aufnahmekörper (3) gegen eine Rückverlagerung in Richtung auf die Normallage gesichert ist.

10. Fahrzeugboden mit Mitteln zur Befestigung eines Fahrzeugsitzes, **dadurch gekennzeichnet, dass** die Mittel durch eine Fahrzeugsitzaufnahme (1a -1d) gemäß einem der Ansprüche 1 bis 9 gebildet sind.

11. Fahrzeugboden nach Anspruch 10, **dadurch gekennzeichnet, dass** die Fahrzeugsitzaufnahme (1a - 1d) im Bereich von Längs- und/oder Querträger des Fahrzeugbodens angeordnet sind.

12. Fahrzeugboden nach Anspruch 10 oder 11, **dadurch gekennzeichnet, dass** die Fahrzeugsitzaufnahme (1a - 1d) in den Fahrzeugboden integriert ist.

13. Fahrzeugboden nach einem der vorhergehenden Ansprüche 10 bis 12, **dadurch gekennzeichnet, dass** die Fahrzeugsitzaufnahme (1a - 1d) im Wesentlichen in einer Ebene mit einer dem Fahrzeugsitz (25) zugewandten Oberfläche des Fahrzeugbodens verläuft.

## Claims

1. A vehicle seat holder with
- a base body connectable with a vehicle floor and
- a receiving body connectable with a vehicle seat, in particular a rail pair of a vehicle seat, preferably a floor rail of a vehicle seat,
**characterized in that**
the receiving body (3) is displaceable in the event of a crash relatively with respect to the base body (2) from a normal position in the direction towards a crash position and the receiving body (3) in normal operation is arranged with a stable position on the base body (2), wherein the receiving body (3) in the normal position is connected in a form-fitting manner with the base body (2) via a disengageable locking element (20) by means of a pyrotechnically or electromagnetically acting actuation unit (16).

2. The vehicle seat holder according to claim 1, **characterized in that** the receiving body (3) is fixed on the base body (2) in the normal position via a force- and/or form-fitting connection.

3. The vehicle seat holder according to claim 1 or 2, **characterized in that** the force-fitting connection is designed for arrangement of the receiving body (3) on the base body (2) in a stable position in normal operation and in a displaceable manner in the event of a crash.

4. The vehicle seat holder according to one of the preceding claims, **characterized in that** the receiving body (3) and the base body (2) are located in contact with each other via friction surfaces (11, 12, 13) in the movement area of the receiving body (3) in the direction towards the crash position.

5. The vehicle seat holder according to one of the preceding claims, **characterized in that** an elastically and/or plastically deformable absorption element (15) is arranged in the movement area of the receiving body (3) out of the normal position in the direction towards the crash position.

6. The vehicle seat holder according to claim 5, **characterized in that** the receiving body (3) and/or the base body (2) are connected with the absorption element (15) in a form-fit and/or bonded manner.

7. The vehicle seat holder according to claim 5 or 6, **characterized in that** the absorption element (15) is formed by a deformable, in particular elastically deformable, plastic mold body, in particular a damping rubber (15).

8. The vehicle seat holder according to one of the preceding claims, **characterized in that** the base body (2) is formed by a casing (2a, 2b) arrangeable on a vehicle floor and the receiving body through a piston element (3) arranged in a shiftable manner in the casing (2a, 2b).

9. The vehicle seat holder according to one of the preceding claims, **characterized in that** the connection of the receiving body (3) with the base body (2) is designed such that the receiving body (3) is secured from shifting back in the direction towards the normal position.

10. A vehicle floor with means for fastening a vehicle seat, **characterized in that** the means are formed by a vehicle seat holder (1a - 1d) according to one of claims 1 to 9.

11. The vehicle floor according to claim 10, **characterized in that** the vehicle seat holder (1a - 1d) is arranged in the area of longitudinal and/or transverse support of the vehicle floor.

12. The vehicle floor according to claim 10 or 11, **characterized in that** the vehicle seat holder (1a - 1d) is integrated into the vehicle floor.

13. The vehicle floor according to one of the preceding claims 10 to 12, **characterized in that** the vehicle seat holder (1a - 1d) progresses mainly in a plane with a surface of the vehicle floor facing the vehicle seat (25).

## Revendications

1. Réception de siège de véhicule, avec
- un corps de base pouvant être raccordé à un fond de véhicule, et
- un corps de réception pouvant être raccordé à un siège de véhicule, en particulier à une paire de rails d'un siège de véhicule, de préférence à un rail de fond d'un siège de véhicule,
**caractérisée en ce que**
le corps de réception (3), en cas de collision, peut être déplacé relativement par rapport au corps de base (2) à partir d'une position normale en direction d'une position de collision, et **en ce que** le corps de réception (3) est, en fonctionnement normal, disposé de façon stable en position sur le corps de base (2), le corps de réception (3) étant, dans la position normale, raccordé par liaison de forme au corps de base (2) par le biais d'un élément de blocage (20) pouvant être amené hors prise au moyen d'une unité d'actionnement (16) à action pyrotechnique ou électromagnétique.

2. Réception de siège de véhicule selon la revendication 1, **caractérisée en ce que** le corps de réception (3) est, dans la position normale, fixé sur le corps de base (2) par le biais d'un raccordement à action par liaison de force et/ou de forme.

3. Réception de siège de véhicule selon la revendication 1 ou 2, **caractérisée en ce que** le raccordement par liaison de force est constitué en vue de la disposition, stable en position en fonctionnement normal et déplaçable en cas de collision, du corps de réception (3) sur le corps de base (2) .

4. Réception de siège de véhicule selon une des revendications précédentes, **caractérisée en ce que** le corps de réception (3) et le corps de base (2) sont, dans la zone de mouvement du corps de réception (3) en direction de la position de collision, en contact l'un avec l'autre par le biais de surfaces de friction (11, 12, 13).

5. Réception de siège de véhicule selon une des revendications précédentes, **caractérisée en ce que**, dans la zone de mouvement du corps de réception (3) à partir de la position normale en direction de la position de collision, il est disposé un élément absorbant (15) déformable élastiquement et/ou plastiquement.

6. Réception de siège de véhicule selon la revendication 5, **caractérisée en ce que** le corps de réception (3) et/ou le corps de base (2) est/sont raccordé(s) à l'élément absorbant (15) par liaison de forme et/ou de matière.

7. Réception de siège de véhicule selon la revendication 5 ou 6, **caractérisée en ce que** l'élément absorbant (15) est formé d'un corps moulé en matière synthétique déformable, en particulier déformable élastiquement, en particulier un caoutchouc amortisseur (15).

8. Réception de siège de véhicule selon une des revendications précédentes, **caractérisée en ce que** le corps de base (2) est formé d'un manchon (2a, 2b) pouvant être disposé sur un fond de véhicule, et **en ce que** le corps de réception est formé d'un élément de piston (3) disposé de façon déplaçable dans le manchon (2a, 2b).

9. Réception de siège de véhicule selon une des revendications précédentes, **caractérisée en ce que** le raccordement du corps de réception (3) au corps de base (2) est constitué de telle sorte que le corps de réception (3) est bloqué contre un déplacement en retour en direction de la position normale.

10. Fond de véhicule avec des moyens pour la fixation d'un siège de véhicule, **caractérisé en ce que** les moyens sont formés d'une réception de siège de véhicule (1a - 1d) selon une des revendications 1 à 9.

11. Fond de véhicule selon la revendication 10, **caractérisé en ce que** la réception de siège de véhicule (1a - 1d) est disposée dans la zone de support longitudinal et/ou transversal du fond de véhicule.

12. Fond de véhicule selon la revendication 10 ou 11, **caractérisée en ce que** la réception de siège de véhicule (1a - 1d) est intégrée dans le fond de véhicule.

13. Fond de véhicule selon une des revendications précédentes 10 à 12, **caractérisée en ce que** la réception de siège de véhicule (1a - 1 d) se situe essentiellement au même niveau qu'une surface du fond de véhicule tournée vers le siège de véhicule (25).
